# EUROPEAN PATENT APPLICATION

(11) **EP 4 516 542 A1**
(43) Date of publication of application: **05.03.2025**
(21) Application number: 24198115.8
(22) Date of filing: 03.09.2024
(51) Int. Cl.: B60H 1/00, B62D 25/02

(54) **CAR PROVIDED WITH AN AIR CONDITIONING SYSTEM ARRANGED BEHIND THE PASSENGER COMPARTMENT**

(30) Priority: 04.09.2023 IT 202300018084
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

Car having a passenger compartment delimited at the front by a dashboard arranged under a windshield, two doors arranged on two opposite sides of the passenger compartment, and an air conditioning system (10) provided with a plurality of air vents distributed in the passenger compartment, an air treatment unit (12), a ventilation device (14) configured to generate an air flow flowing through the air treatment unit (12), and two supply ducts (13) connecting an outlet of the air treatment unit (12) to the air vents, wherein the air treatment unit (12) and the ventilation device (14) are arranged on the outside of the passenger compartment and behind the passenger compartment, and the two supply ducts (13) which originate from the outlet of the air treatment unit (12), run beside the passenger compartment in the area of the doors and end in the dashboard for air vents arranged in the dashboard.

## Description

### CROSS-REFERENCE TO RELATED APPLICATIONS

This patent application claims priority from Italian patent application no. 102023000018084 filed on September 4, 2023, the entire disclosure of which is incorporated herein by reference.

### FIELD OF THE ART

The present invention relates to a car provided with an air conditioning system.

### PRIOR ART

In a car there is an air conditioning system, which is intended to air-condition a passenger compartment of the car by injecting treated (heated, cooled, dehumidified and/or filtered) air into the passenger compartment according to the wishes of the passengers. For this purpose, the air conditioning system comprises an air treatment unit, which is adapted to treat the air that is subsequently injected into the passenger compartment through a series of air vents present in the passenger compartment itself.

Normally, inside the passenger compartment the air vents are arranged at different levels to be able to inject air into different areas of the passenger compartment itself. In particular, there are usually upper vents intended to inject air towards the inner surface of the windshield, intermediate vents intended to inject air towards the occupants of the front seats, and lower vents intended to inject air towards the feet of the occupants of the front seats.

In cars currently in production, the air treatment unit is arranged partly in a front compartment (which can be an engine compartment or a luggage compartment) and partly in the front part of the passenger compartment inside the dashboard (i.e. the blind bulkhead that delimits the passenger compartment in front and is positioned under the windshield). The overall size of the air treatment unit is significant and, in a high-performance sports car, significantly affects the design of the car which, due to the presence of the air conditioning system, must be somewhat larger (therefore heavier) than strictly necessary to achieve the desired performance.

Patent application GB1246803A describes a car provided with an air conditioning system comprising an air treatment unit arranged behind the passenger compartment and two supply ducts which run beside the passenger compartment at the doors and end in a dashboard for the air vents arranged in the dashboard.

Patent application EP3581411A1 describes a sports car in which the air treatment unit is arranged behind the passenger compartment and above the passenger compartment there is provided a central beam which, among other things, supports air vents and an air supply duct connecting the air vents to the air treatment unit. According to a possible embodiment, there are lateral longitudinal elements that are located near, on both sides of the car, the lower edges of the openings of access to the passenger compartment and are generally an integral part of the floor of the passenger compartment; these longitudinal elements are made up of tubular elements that allow a part of the air coming from the air treatment unit to be conveyed towards air vents arranged in the area of the legs and/or the dashboard.

Utility model DE1929373U describes a car provided with an air conditioning system comprising an air treatment unit arranged in front of the passenger compartment and two supply ducts running beside the passenger compartment at the doors.

### DISCLOSURE OF THE INVENTION

Aim of the present invention is to provide a car provided with an air conditioning system that overall has a small footprint and, at the same time, allows effective and efficient air conditioning of the passenger compartment.

According to the present invention there is provided a car provided with an air conditioning system as claimed in the appended claims.

The claims describe preferred embodiments of the present invention forming an integral part of the present disclosure.

### BRIEF DESCRIPTION OF THE DRAWINGS

The present invention will now be described with reference to the enclosed drawings, showing some nonlimiting embodiments thereof, wherein:
- Figure 1 is a perspective view of a car provided with an air conditioning system;
- Figure 2 is a schematic and plan view of the car of Figure 1;
- Figures 3 and 4 are two different perspective views and with the removal of parts for clarity of the air conditioning system of the car of Figure 1;
- Figure 5 is a perspective view and with the removal of parts for clarity of part of a side of the car of Figure 1 with a duct of the air conditioning system in evidence;
- Figure 6 is a view on enlarged scale of a detail of Figure 5;
- Figures 7 and 8 schematically show a mechanism shown in Figures 5 and 6; and
- Figure 9 is a perspective view and with the removal of parts for clarity of part of a side of the car of Figure 1 with a different embodiment of a duct of the air conditioning system in evidence.

### PREFERRED EMBODIMENTS OF THE INVENTION

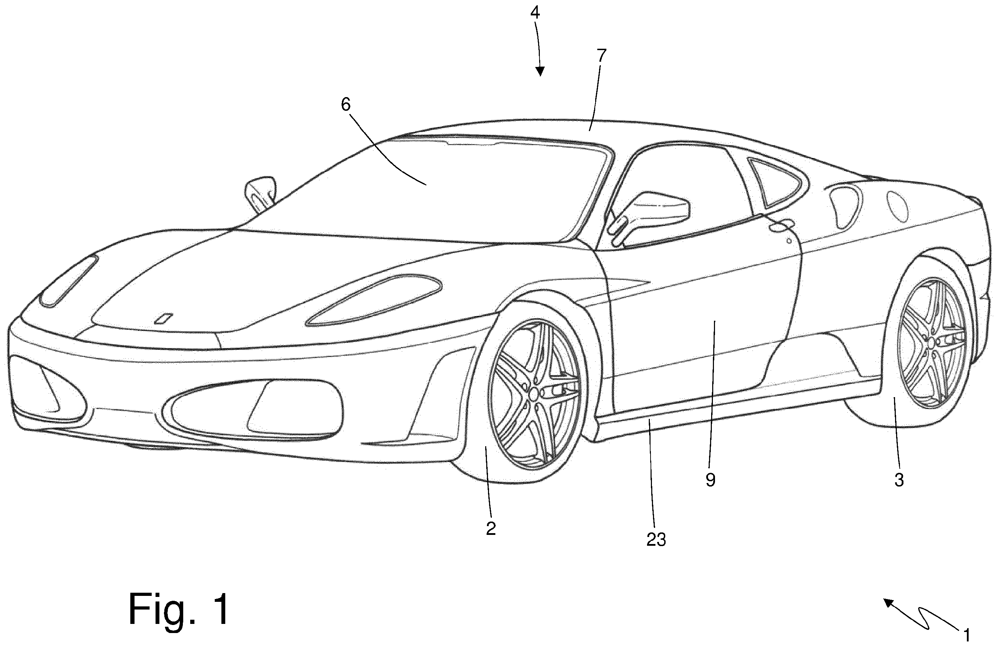

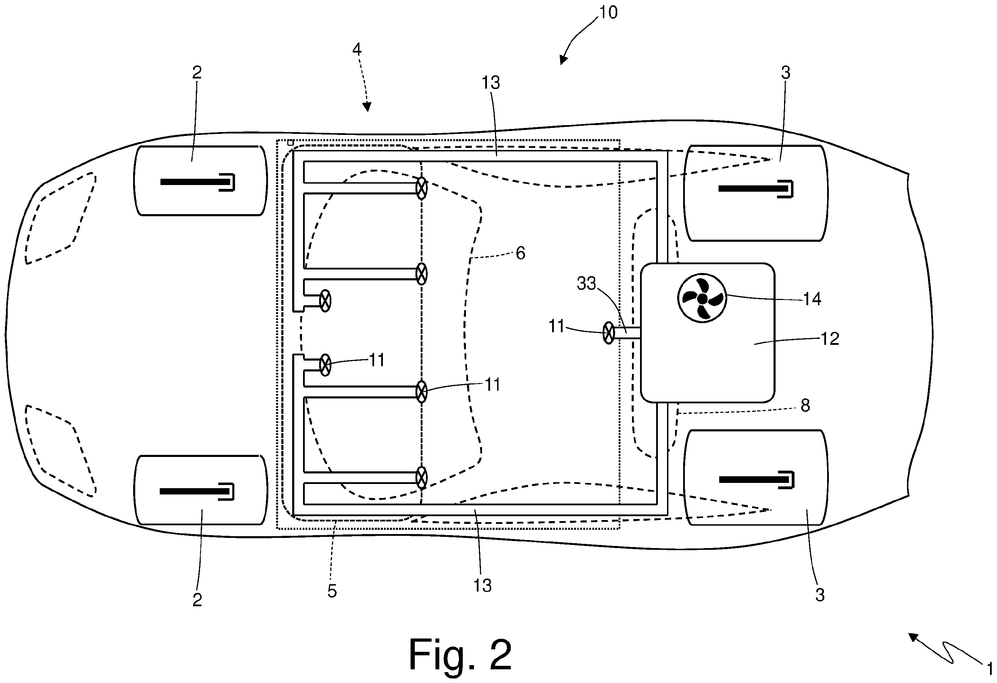

In Figures 1 and 2, number 1 denotes as a whole a car with two front wheels 2 (which can be driven or driving wheels) and two rear wheels 3 (which are driving wheels).

The car 1 comprises a passenger compartment 4 which is arranged between the two front wheels 2 and the two rear wheels 3, is delimited at the front by a dashboard 5 arranged under a windshield 6 and houses (at least) two seats. The passenger compartment 4 is delimited at the front by the windshield 6, is delimited at the top by a roof 7 that connects with the windshield 6, is delimited at the rear by a rear window 8 (i.e. a rear window part) that connects with the roof 7, and is delimited at the side by two doors 9.

The car 1 comprises an air conditioning system 10 having the function of air conditioning the interior volume of the passenger compartment 4 with particular attention to the volume at the seats in which there are the occupants of the car 1. The air conditioning system 10 comprises a plurality of air vents 11 arranged inside the passenger compartment 4 and an air treatment unit 12 adapted to treat the air that is subsequently injected into the passenger compartment 4 through the air vents 11. In addition, the air conditioning system 10 comprises supply ducts 13 that connect the air treatment unit 12 to the air vents 11 and a ventilation device 14 configured to generate an air flow flowing through the air treatment unit 12 (and which therefore generates the movement of the air that pushes the air to pass through the air treatment unit 12 and to flow along the supply ducts 13 until it exits the air vents 11).

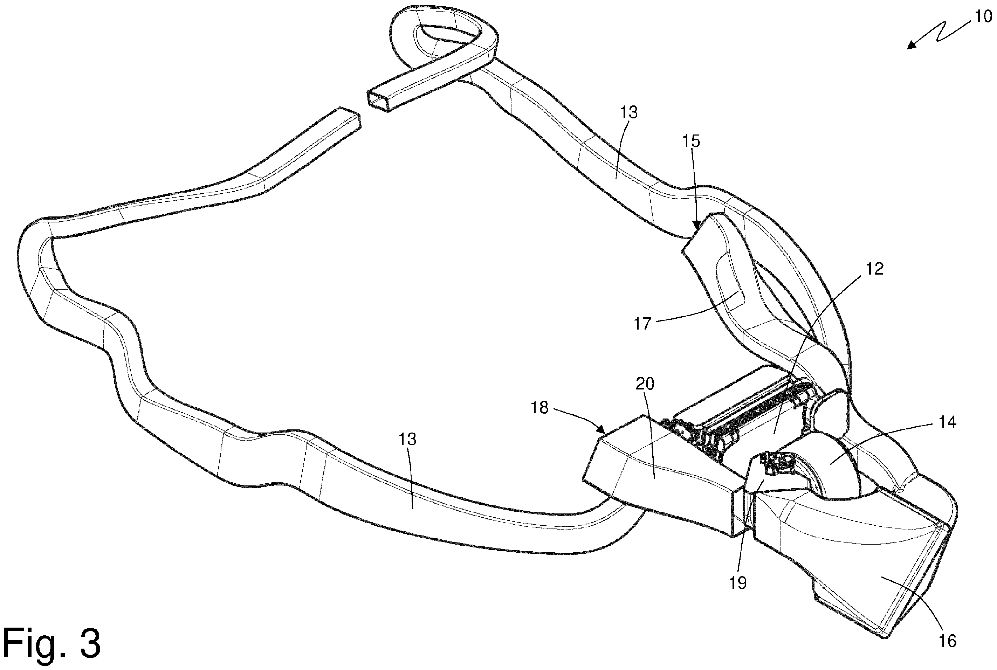

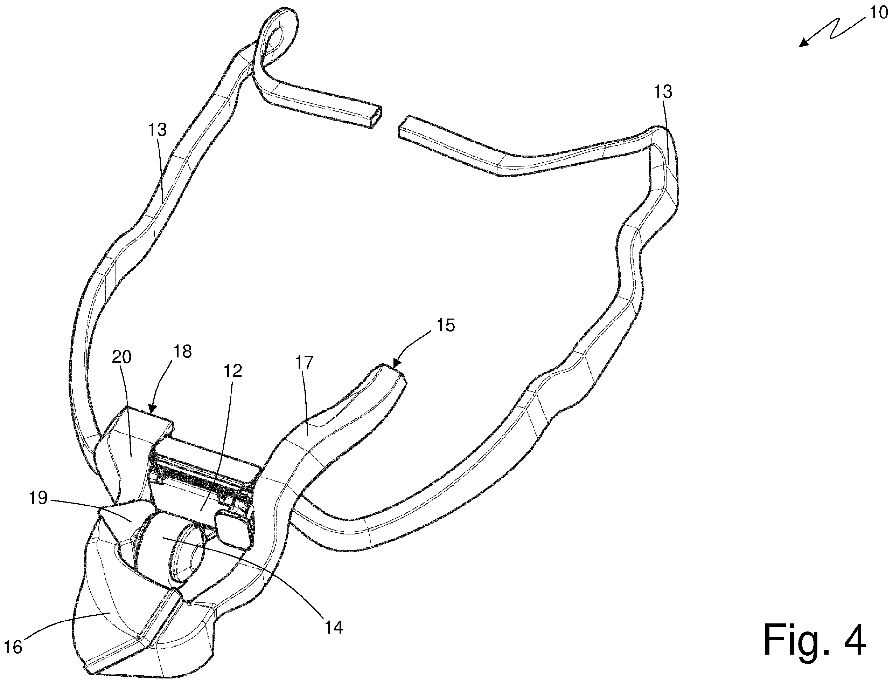

According to what is shown in Figures 3 and 4, the air treatment unit 12 and the ventilation device 14 are arranged on the outside of the passenger compartment 4 and behind the passenger compartment 4 (i.e. they are separated from the passenger compartment 4 by a rear wall that delimits the passenger compartment 4 at the rear). Furthermore, there are provided two supply ducts 13 which originate from the outlet of the air treatment unit 12, run beside the passenger compartment 4 in the area of the doors 9 and end in the dashboard 5 for the air vents 11 arranged in the dashboard 5.

According to what is shown in Figures 3 and 4, the air conditioning system 10 comprises an outer air intake 15 configured to suck air from an external environment (i.e. from the outside of the car 1) and an air box 16 which is arranged on the outside of the passenger compartment 4 and behind the passenger compartment 4, contains an air filter, has an inlet connected to the outer air intake 15 by means of a feeding duct 17 and has a direct outlet towards the air treatment unit 12. In other words, the air box 16 is separated from the passenger compartment 4 by the rear wall which delimit the passenger compartment 4 at the rear.

Furthermore, the air conditioning system 10 comprises an inner air intake 18 configured to suck air from the passenger compartment 4, and a three-way adjustment device 19, which is arranged on the outside of the passenger compartment 4 and behind the passenger compartment 4 and comprises two inlets connected to the inner air intake 18 and to the outlet of the air box 16 (i.e. to the outer air intake 15 through the air box 16), respectively and one single outlet connected to the air treatment unit 12 with the interposition of the ventilation device 14 (i.e. the ventilation device 14 is interposed between the outlet of the adjustment device 19 and the inlet of the air treatment unit 12). In other words, the adjustment device 19 is separated from the passenger compartment 4 by the rear wall which delimits the passenger compartment 4 at the rear.

According to a preferred embodiment, the outer air intake 15 is arranged behind the roof 7 of the passenger compartment 4 and beside the rear window 8 of the passenger compartment 4; this area is optimal for sucking external air as it is a (relatively) "*calm*" air area even when the car 1 advances at high speed.

According to a preferred embodiment, the inner air intake 18 is arranged in a rear area of the passenger compartment 4, goes through the rear wall of the passenger compartment 4 and is connected to the adjustment device 19 by means of a feeding duct 20.

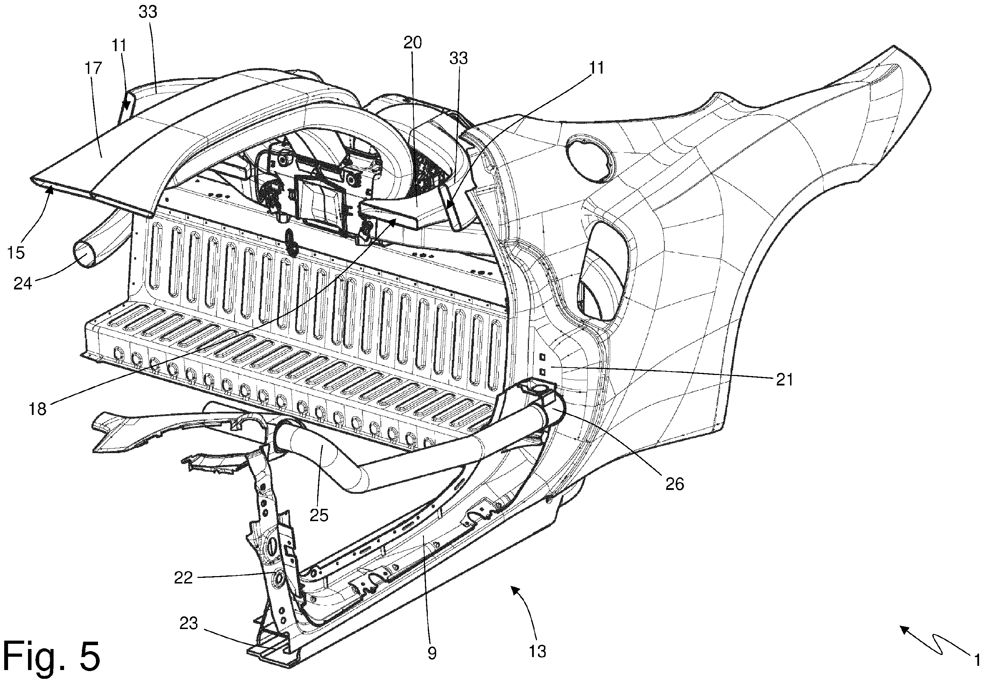

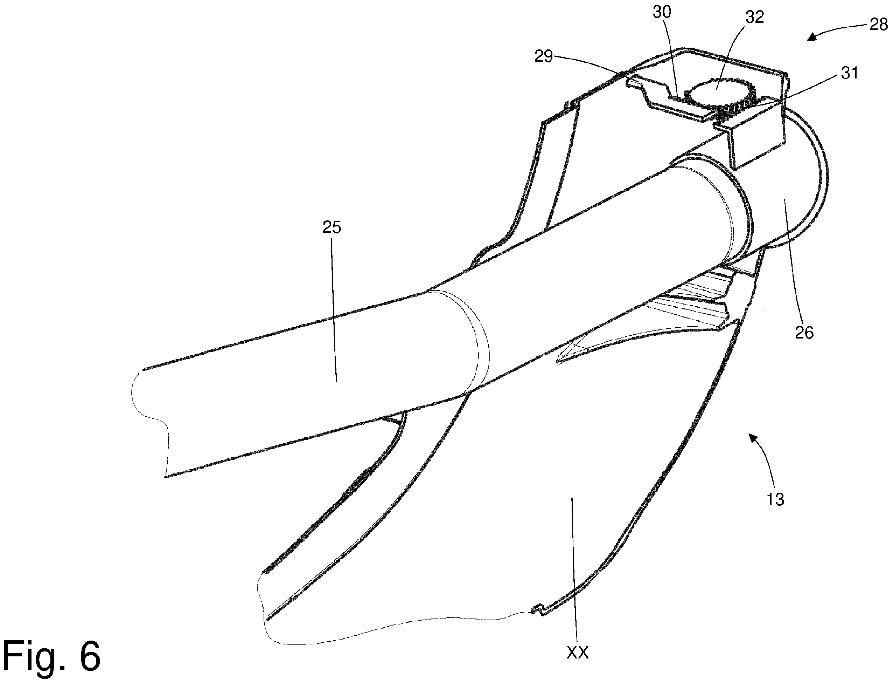

In the embodiment shown in Figures 5-8, each supply duct 13 is arranged through a respective door 9, i.e. it longitudinally passes through (from back to front) the respective door 9.

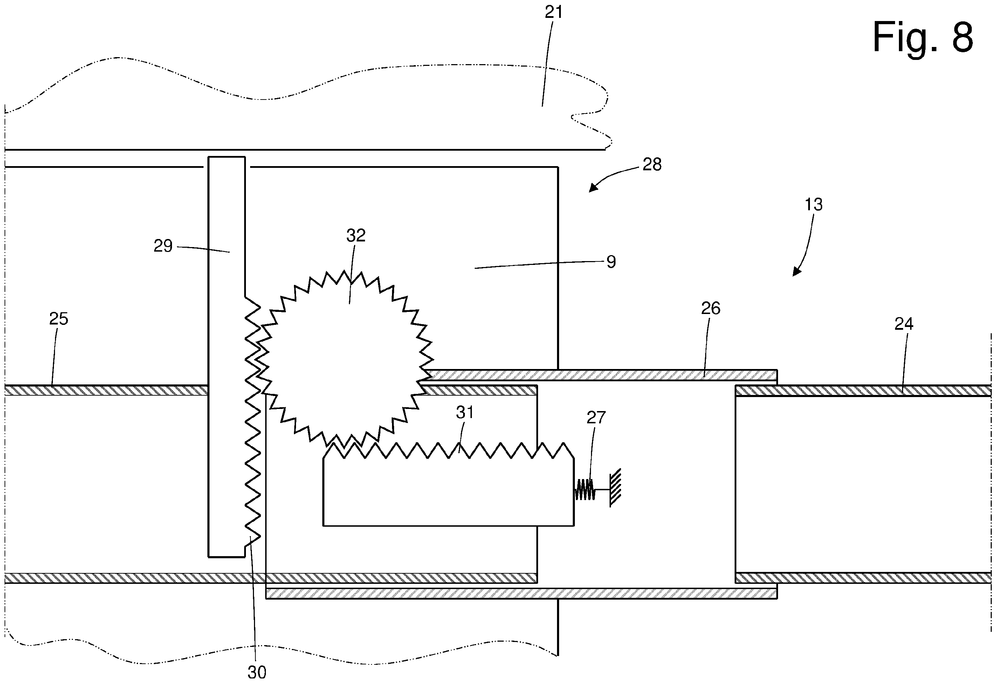

As better shown in Figure 5, a frame of the car 1 comprises on each side an opening which is engaged by a respective door 9, is delimited at the top by the roof 7, is delimited at the back by a central pillar 21, is delimited at the front by a front pillar 22 and is delimited at the bottom by a door sill 23. Each supply duct 13 comprises a pipe 24 (shown in Figure 8) which originates from the outlet of the air treatment unit 12 and ends in a respective central pillar 21 and a pipe 25 which originates from a rear wall of a respective door 9, goes through the entire door 9 to exit from a front wall of the door 9 and then continue into the dashboard 5, and is coupled to the pipe 24 when the door 9 is closed.

According to a preferred embodiment, in each supply duct 13 and in order to improve the pneumatic coupling between the two pipes 24 and 25, the pipe 25 is mounted in an axially movable manner so as to move closer to the other pipe 24 when the door 9 is closed and so as to move away from the other pipe 24 when the door 9 is opened (alternatively, it could be the pipe 24 mounted in an axially movable manner to move closer and move away from the other pipe 25).

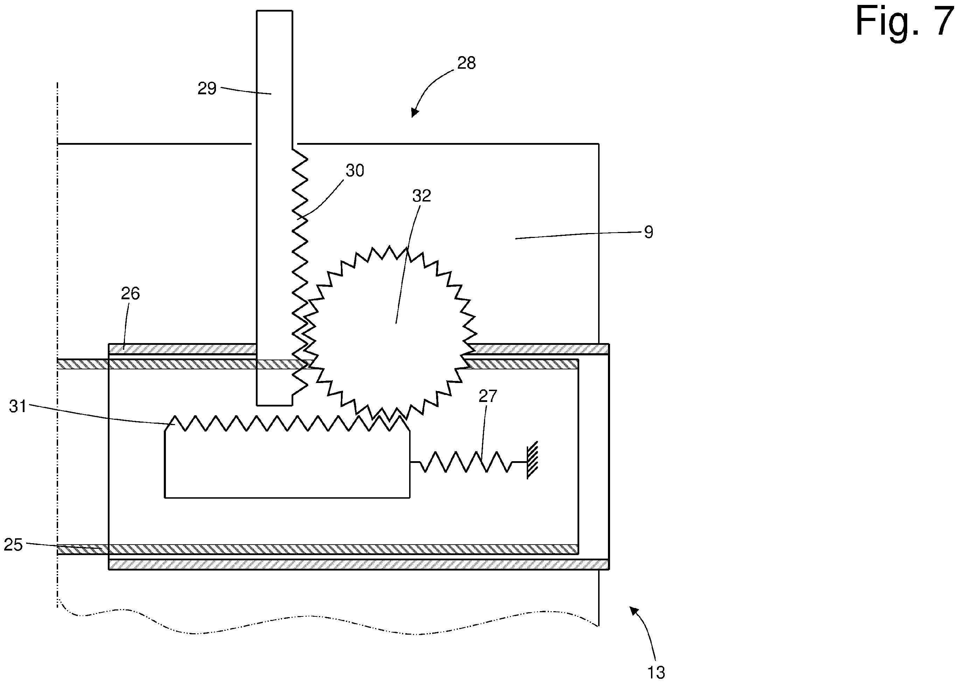

In each supply duct 13, the pipe 25 comprises a sleeve 26, which is arranged around the pipe 25 and can axially slide relative to the pipe 25 so as to move closer to the first pipe 24 (as shown in Figure 8) when the door 9 is closed and so as to move away from the first pipe 24 (as shown in Figure 7) when the door 9 is opened. Each supply duct 13 comprises an elastic element 27 which pushes the sleeve 26 away from the pipe 24 (i.e. tends to shorten the pipe 25) and an actuator device 28 which moves the sleeve 26 towards the pipe 24 when the door 9 is closed (i.e. lengthens the pipe 25).

Each actuator device 28 comprises a push rod 29 which is mounted on the door 9 in a movable manner and is configured to rest on the central pillar 21 of the frame of the car 1 when the door 9 is closed so as to be pushed outwards by the contact with the central pillar 21 and a transmission member which transmits the motion from the push rod 29 to the sleeve 26. Each transmission member comprises a rack 30 integral to the push rod 29, a rack 31 which is integral to the sleeve 26 and is oriented perpendicular to the rack 30, and a gear wheel 32 which is mounted in an idle manner and meshes with both racks 30 and 31.

In the embodiment shown schematically in Figures 7 and 8, the elastic element 27 is a linear spring that pushes on the rack 31 integral to the sleeve 26; alternatively, the linear spring could push directly on the sleeve 26 or on the rack 30. According to a different embodiment, the elastic element 27 is a torsional spring coupled to the gear wheel 32.

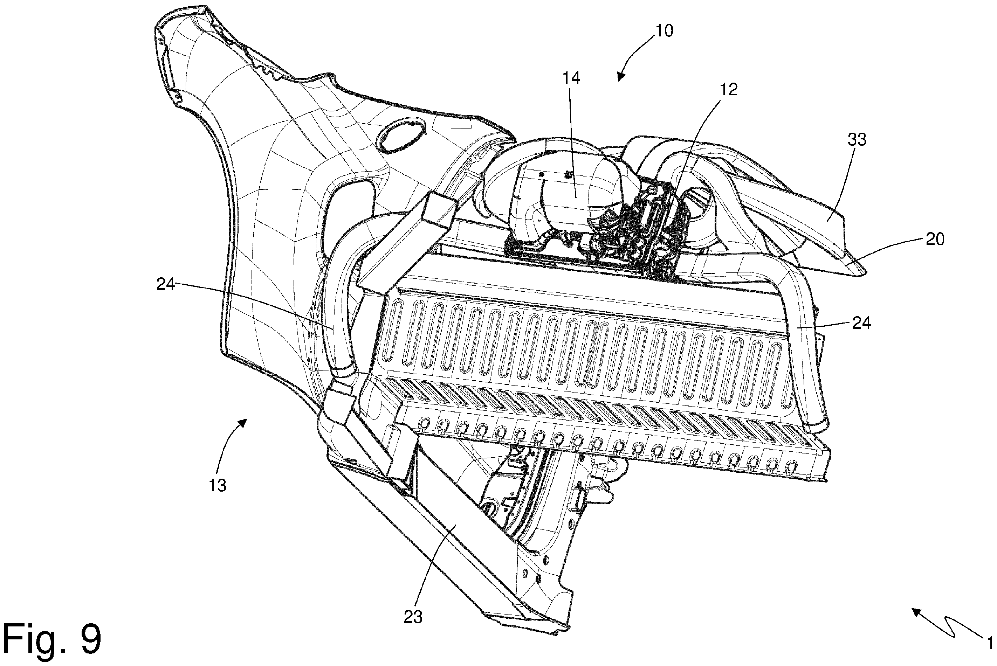

In the alternative embodiment shown in Figure 9, each supply duct 13 is arranged through a respective door sill 23 (instead of crossing the door 9 arranged, when closed, above the door sill 23). Preferably, at the respective door sill 23, each supply duct 13 is made up of an inner cavity of the door sill 23.

According to a preferred embodiment shown in Figures 2 and 5, the air conditioning system 10 comprises (at least) an air vent 11 arranged in a rear area of the passenger compartment 4 and a supply duct 33 which originates from the outlet of the air treatment unit 12 and ends (going through the rear wall of the passenger compartment 4) in the air vent 11 arranged in the rear area of the passenger compartment 4. According to a possible embodiment, the air flow rate is adjustable (partialisable) only through the air vents 11 arranged in the front position (i.e. in the dashboard 5) while the air flow rate through the air vents 11 arranged in the rear position is not adjustable (partialisable) .

According to a possible embodiment, there are provided two supply ducts (not shown) which originate from the outlet of the air treatment unit 12 and end in the seats to directly ventilate the seats.

According to a possible embodiment, air vents 11 could also be provided which are arranged on the doors 9 and receive the air directly from the supply ducts 13 that pass through the doors 9.

In the embodiment shown in Figures 3 and 4, the outer air intake 15 is arranged laterally behind the roof 7 of the passenger compartment 4 and beside the rear window 8 of the passenger compartment 4; this embodiment is also suitable for making a spider car having an openable roof. In particular, in the case of a spider car having an openable roof, the outer air intake 15 could be obtained through a cover of a rear compartment that houses the roof when it is opened; in this case, the feeding duct 17 is divided into two parts: an initial part integral to the cover and an end part integral to the frame and the two parts separate when the cover is opened and couple again when the cover is closed.

In the alternative embodiment shown in Figures 5 and 9, the outer air intake 15 is arranged centrally on the roof 7; this embodiment is also suitable for making a car having a "*targa top*" type bodywork in which the central portion of the roof 7 always remains in the same position.

The above-described car 1 is particularly suitable for using an electric drive on the four wheels 2 and 3, but may also use an internal combustion engine which is arranged behind the cabin 4 (in a central position).

The embodiments described herein can be combined with each other without departing from the scope of protection of the present invention.

The above-described car 1 has numerous advantages.

Firstly, in the car 1 described above, the dashboard 5 is particularly thin and narrow, increasing the free space inside the passenger compartment 4 and, at the same time, allowing a more compact (therefore lighter) car 1 to be made. This result is achieved by leaving only the air vents 11 (and an end part of the supply ducts 13) in the dashboard as all the other components of the air conditioning system 10 are moved on the outside of the passenger compartment 4 and behind the passenger compartment 4.

Furthermore, the front part of the car 1 is free from components of the air conditioning system 10 and can therefore be made shorter allowing to obtain a more compact (therefore lighter) car 1. In the front part of the car 1 it remains also space for aerodynamic ducts that allow to improve aerodynamic efficiency (i.e. to reduce aerodynamic driving resistance and/or to increase downforce).

Finally, the air conditioning system 10 is particularly noiseless as the supply ducts 13 (although having a high length) have a very linear geometry and therefore have a low aerodynamic resistance (which results in reduced noise).

### LIST OF REFERENCE NUMBERS OF THE FIGURES

- 1: car
- 2: front wheels
- 3: rear wheels
- 4: passenger compartment
- 5: dashboard
- 6: windshield
- 7: roof
- 8: rear window
- 9: door
- 10: air conditioning system
- 11: air vents
- 12: air treatment unit
- 13: supply ducts
- 14: ventilation device
- 15: outer air intake
- 16: air box
- 17: feeding duct
- 18: inner air intake
- 19: adjustment device
- 20: feeding duct
- 21: central pillar
- 22: front pillar
- 23: door sill
- 24: pipe
- 25: pipe
- 26: sleeve
- 27: elastic element
- 28: actuator device
- 29: push rod
- 30: rack
- 31: rack
- 32: gear wheel
- 33: supply duct

## Claims

1. A car (1) comprising:
a passenger compartment (4) delimited, at the front, by a dashboard (5) arranged under a windshield (6);
two doors (9) arranged on the two opposite sides of the passenger compartment (4);
a frame comprising, on each side, an opening, which is engaged by a respective door (9), is delimited at the top by a roof (7), is delimited at the back by a central pillar (21), is delimited at the front by a front pillar and is delimited at the bottom by a door sill (23); and
an air conditioning system (10) provided with: a plurality of air vents (11) distributed in the passenger compartment (4), an air treatment unit (12), a ventilation device (14) configured to generate an air flow flowing through the air treatment unit (12) and two supply duct (13) connecting an outlet of the air treatment unit (12) to the air vents (11);
wherein the air treatment unit (12) and the ventilation device (14) are arranged on the outside of the passenger compartment (4) and behind the passenger compartment (4);
wherein the two supply ducts (13) run beside the passenger compartment (4) in the area of the doors (9) and end in the dashboard (5) for the air vents (11) arranged in the dashboard (5);
the car (1) is **characterized in that:**
each supply duct (13) is arranged through a respective door (9) ;
each supply duct (13) comprises a first pipe (24), which originates from the outlet of the air treatment unit (12) and ends in a respective central pillar (21), and a second pipe (25), which originates from a rear wall of a respective door (9) and is coupled to the first pipe (24) when the door (9) is closed; and
in each supply duct (13), a pipe (25) is mounted in an axially movable manner so as to move closer to the other pipe (24) when the door (9) is closed and so as to move away from the other pipe (24) when the door (9) is opened.

2. The car (1) according to claim 1, wherein the air conditioning system (10) comprises:
an outer air intake (15) to suck air from the outside; and
an air box (16), which is arranged on the outside of the passenger compartment (4) and behind the passenger compartment (4), contains an air filter, has an inlet connected to the outer air intake (15) by means of a feeding duct (17) and has a direct outlet towards the air treatment unit (12).

3. The car (1) according to claim 2, wherein the outer air intake (15) is arranged behind a roof (7) of the passenger compartment (4) beside a rear window (8) of the passenger compartment (4).

4. The car (1) according to claim 2 or 3, wherein the air conditioning system (10) comprises:
an inner air intake (18) to suck air from the passenger compartment (4); and
a three-way adjustment device (19), which is arranged on the outside of the passenger compartment (4) and behind the passenger compartment (4) and comprises two inlets connected to the inner air intake (18) and to the outlet of the air box (16), respectively, and one single outlet connected to the air treatment unit (12).

5. The car (1) according to claim 4, wherein the inner air intake (18) is arranged in a rear area of the passenger compartment (4) and goes through a rear wall of the passenger compartment (4).

6. The car (1) according to claim 4 or 5, wherein the ventilation device (14) is interposed between the outlet of the three-way adjustment device (19) and an inlet of the air treatment unit (12).

7. The car (1) according to claim 1 to 6, wherein, in each supply duct (13), the second pipe (25) comprises a sleeve (26), which is arranged around the second pipe (25) and can axially slide relative to the second pipe (25) so as to move closer to the first pipe (24) when the door (9) is closed and so as to move away from the first pipe (24) when the door (9) is opened.

8. The car (1) according to claim 7, wherein each supply duct (13) comprises:
an elastic element (27), which pushes the sleeve (26) away from the first pipe (24); and
an actuator device (28), which moves the sleeve (26) towards the first pipe (24) when the door (9) is closed.

9. The car (1) according to claim 8, wherein each actuator device (28) comprises:
a push rod (29), which is mounted on the door (9) in a movable manner and is configured to rest against a frame when the door (9) is closed so as to be pushed outwards by the contact with the frame; and
a transmission member, which transmits the motion from the push rod (29) to the sleeve (26).

10. The car (1) according to claim 9, wherein each transmission member comprises a first rack (30) integral to the push rod (29), a second rack (31), which is integral to the sleeve (26) and is oriented perpendicularly to the first rack (30), and a gear wheel (32), which is mounted in an idle manner and meshes with both racks (30, 31).

11. The car (1) according to one of the claims from 1 to 10, wherein the air conditioning system (10) comprises a further supply duct (33), which originates from the outlet of the air treatment unit (12) and ends in at least one air vent (11) arranged in a rear area of the passenger compartment (4).
